# EUROPEAN PATENT APPLICATION

(11) **EP 2 192 015 A1**
(43) Date of publication of application: **02.06.2010**
(21) Application number: 08425759.1
(22) Date of filing: 26.11.2008
(51) Int. Cl.: B60W 50/08, B60W 40/08

(54) **Automatic setting of a motor vehicle performance profile**

(71) Applicant: Fiat Group Automobiles S.p.A., 10135 Torino (TO) (IT)
(72) Inventor: Avena, Claudio, 10135 Torino (IT)
(74) Representative: Bergadano, Mirko

(57) **Abstract**

An electronic motor vehicle control system (8) is described, wherein the motor vehicle (1) is provided with automotive systems comprising an engine and a user interface (3) comprising a wireless communication module (4) configured to automatically detect and/or identify personal portable wireless communication devices (5) within its communication field. The electronic motor vehicle control system (8) comprises an electronic control unit (10) for automatically setting a performance profile of the automotive systems, which is configured to store performance data defining a series of performance profiles (P₁, P₂, P₃) of the automotive systems, and to implement a control mode of the automotive systems so as to obtain one of said various, predetermined performance profiles (P₁, P₂, P₃) according to the detection and/or identification.

## Description

The present invention relates to the automatic setting of a motor vehicle performance profile.

As known, in automotive field, the designing related to the functions performable by the driver or by the passengers aboard the motor vehicle is increasingly directed to solutions characterized by a high level of interactivity between driver, passengers, motor vehicle and outside world.

Specifically, the control that the driver and the passengers can perform on the motor vehicle functions, such as, for example, controlling the climate control system, the sound system etc., and on the interaction of the motor vehicle with the outside world, such as, for example, managing phone calls made using the mobile phone and their overlay with the music listening, managing information from the onboard computer, interacting with the onboard satellite navigator etc., is constantly increasing.

For this purpose, modern motor vehicles are provided with Human Machine Interfaces (HMI) by means of which a user, either the driver or a passenger, can interact with the onboard systems, such as for example entering a destination in the satellite navigator, an address or a phone number in a directory of a hands-free onboard system for managing mobile phone calls etc.

The Blue&Me^{™} infotainment system, for example, is a infotelematic onboard communication and entertainment system for vehicles, developed by the applicant, which offers Bluetooth connectivity, USB and a hands-free phone kit, which may be completely operated by means of voice controls. Specifically, the Blue&Me^{™} system allows the driver and the passengers to use personal devices, such as mobile phones, PDAs, music players or external hard disks, without requiring to use the controls of such devices, so as to make their use more convenient and less dangerous while driving.

For this purpose, the Blue&Me^{™} system is provided with a voice recognition system which allows to access most of the functions, either by means of voice controls, or by using buttons arranged on the car steering wheel. The data exchange between the personal devices and the Blue&Me^{™} system typically occurs by means of a Bluetooth communication system, which is structured to connect the mobile phones and PDAs to the system platform.

Furthermore, a maximum speed limiting function has been recently introduced in some medium-to-high range vehicles and some commercial vehicles in order to improve occupants' safety.

Specifically, such vehicles are provided with a speed limiting control system, generally separate from the infotelematic onboard systems, which allows the driver, by means of appropriate controls, to activate/deactivate the speed limiter and to set the desired limit speed which may not be exceeded by the vehicle as long as the speed limiter is on.

In the aforesaid vehicles, the use of the speed limiting control system is thus completely at the driver's discretion, who is free to activate and deactivate the speed limiter and set the limit speed as desired.

The aforesaid solution is particularly disadvantageous if the vehicle is used by several users and there is a need to associate a particular performance profile of the vehicle with a user, e.g. on the basis of the user's skills and driving experience, and to ensure that the performance profile associated with the user is actually implemented whenever he/she is driving the vehicle.

If, for example, a vehicle provided with a speed limiting control system of known type is used both by a driver of long driving experience and by a driver of little driving experience, the speed limiter may be activated and a driving profile which suits the least expert driver may be set, e.g. which limits the vehicle speed, but it may not be ensured that the least expert driver will actually activate and set the speed limiter when he/she is driving the vehicle.

A need is therefore felt to make a motor vehicle control system which is able to set a motor vehicle performance profile in a completely automatic manner according to the driver of the vehicle itself.

Such a need is met by the present invention as it relates to an electronic motor vehicle control system, as defined in the appended claims.

For a better understanding of the present invention, a preferred embodiment will now be described by way of non-limiting example only, and with reference to the accompanying drawings, in which:
- Figure 1 diagrammatically shows a motor vehicle passenger compartment provided with a motor vehicle control system made according to the dictates of the present invention; while
- figure 2 shows a flow chart of the operations implemented by the system for automatically setting a motor vehicle performance profile.

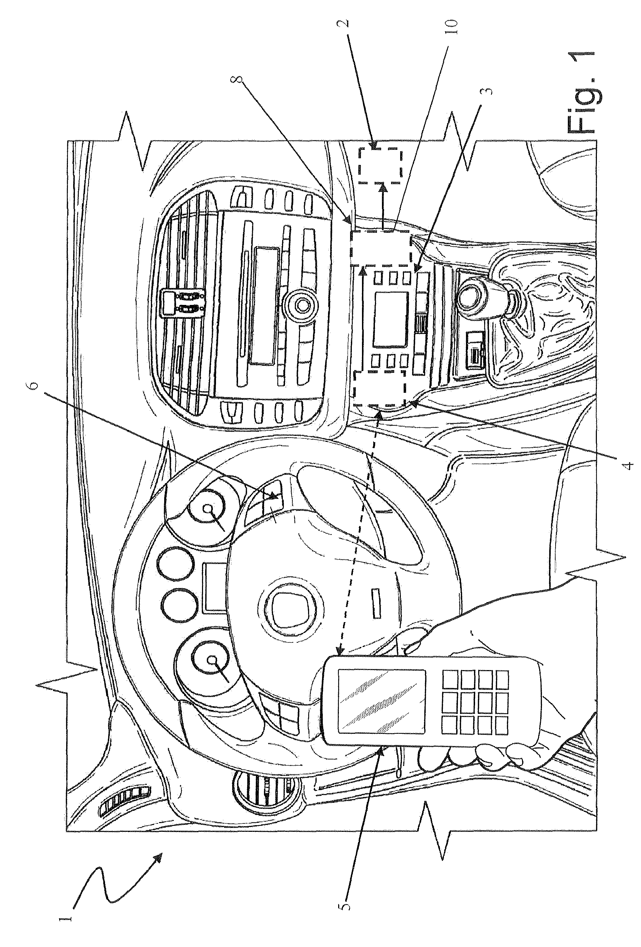

With reference to figure 1, numeral 1 indicates as a whole a motor vehicle (of which the passenger compartment is only shown for descriptive simplicity), which is provided with a series of automotive systems comprising: an internal combustion engine of known type (not shown), which is controlled by a corresponding electronic engine control unit 2, and a human-machine interface which, in the example shown, corresponds to a infotelematic system 3.

The internal combustion engine and the electronic engine control unit 2 are known and therefore will not be illustrated further, while the infotelematic system 3 is adapted to allow a user, either the driver or a passenger, to interact with one or more electronic onboard systems (not shown) for imparting commands for selecting some functions made available by the system themselves.

Specifically, the infotelematic system 3 is structured to allow the user to enter a destination in the satellite navigator (not shown) and/or an address or a phone number in a directory of a hands-free onboard system for managing mobile phone calls and/or carrying out similar functions.

In this case, in the example shown in figure 1, the infotelematic onboard system 3 comprises: at least one wireless communication module 4 able to actuate, within its own communication field, a wireless connection with personal, portable communication devices 5, i.e. associated with a person, specifically to the driver of the motor vehicle 1, and a plurality of buttons 6 placed, for example, on the steering wheel of the motor vehicle 1, for allowing the user to impart commands to the infotelematic system 3 and/or to select the functions of the portable communication devices 5.

Moreover, the infotelematic system 3 preferably but not necessarily comprises a voice recognition system (not shown), which similarly to the buttons 6 allows the user to control some functions of the personal, portable communication devices 5 by means of voice controls, while the wireless communication module 4 is able to establish a wireless radio-frequency connection, according to the known Bluetooth communication protocol, with a personal, portable communication device 5, which may correspond, for example, to a mobile phone (shown in figure 1), and/or to a PDA or any similar portable wireless communication device.

The wireless communication module 4 is structured to actuate a pairing operation with the portable communication device 5. During the pairing operation, the wireless communication module 4, in virtue of the known Bluetooth communication protocol architecture, receives a Bluetooth name or code from the portable communication device 5, which univocally identifies the portable communication device 5 itself.

The motor vehicle 1 further comprises an electronic control system 8, which is provided, in turn, with an electronic control unit 10, which cooperates with the wireless communication module 4 to receive a detection signal and/or the user code of the portable communication device 5 therefrom, and is adapted to process it so as to be able to determine a condition of presence and/or absence of the portable communication device 5 and/or to identify the portable communication device 5 itself.

The electronic control unit 10 is further structured to automatically set a performance profile of the automotive systems corresponding to the above-described engine and/or infotelematic system 3.

Specifically, the electronic control unit 10 is configured to store performance data defining a series of performance profiles of the engine and/or of the infotelematic system 3, and to implement a control mode of the motor itself so as to obtain one of the various, predetermined engine performance profiles according to the condition of detection and/or identification of the portable communication device 5.

The electronic control unit 10 may be further configured to store performance data defining a series of performance profiles of the infotelematic system 3, and to implement a control mode of the infotelematic system 3, so as to obtain one of the various, predetermined performance profiles of the infotelematic system 3 according to the condition of detection and/or identification of the portable communication device 5.

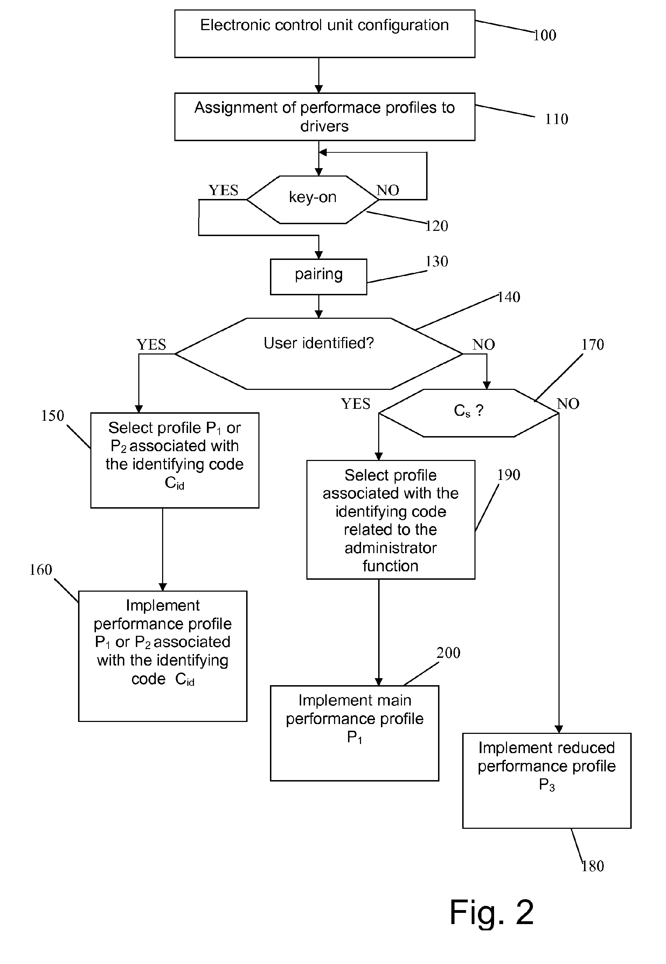

The flow chart depicted in figure 2 shows the various operative steps implemented by the electronic control unit 10 of the electronic control system 8 to automatically set a performance profile of an automotive system corresponding to the engine of the motor vehicle 1, according to the detection and/or the identification of a portable wireless communication device 5.

The electronic control system 8 may include an operation of configuring the electronic control unit 10 and configuring the infotelematic system 3 (block 100).

Specifically, the aforesaid step of configuring includes:
- storing at least a database DAT₁ in the electronic control unit 10, containing:

- a series of performance data or information defining a main performance profile P₁, which allows to completely exploit the motor vehicle performance, adapted, for example, to an expert driver; and a series of performance data or information defining one or more secondary performance profiles P₂, adapted to limit the performance of the motor vehicle 1 with respect to the performance associated with the main performance profile P₁ and adapted, for example, to a least expert driver; and
- a series of performance data or information defining the engine control modes, required to obtain the main P₁ and secondary P₂ performance profiles.

Specifically, each secondary performance profile P₂ may be configured so as to limit vehicle engine performance. For example, each secondary performance profile P₂ may be configured to limit the maximum speed which may be reached by the vehicle and/or the delivered power and/or the driving torque generated by the engine below a predetermined limit threshold S1. In other words, each secondary performance profile P₂ is a profile which allows one or more characteristic quantities related to engine performance to have a value either lower than or equal to the predetermined limit threshold S1.

With regard to the main performance profile P₁, it may be, for example, configured so as not to limit any performance that the vehicle engine is able to obtain, and to thus allow the driver of the vehicle to fully exploit the potentials of the engine itself. In other words, the main performance profile P₁ is a profile which allows one or more characteristic quantities of the engine related with engine performance to reach and freely exceed the predetermined limit threshold S1.

More in detail, said performance data, i.e. the information related to the engine control modes required for achieving the main P₁ and secondary P₂ performance profiles, could be for example information related to control modes for opening the injectors according to the amount of fuel which needs to be injected into the engine cylinders to obtain the performance profiles P₁ or P₂.

Preferably, but not necessarily, the performance profile that the electronic control unit 10 implements if the driver is not detected and/or not recognized when keying the motor vehicle 1 on is a performance profile which may coincide with a reduced performance profile P₃ in which the engine performance is lower than the performance of the main P₁ and secondary P₂ performance profiles.

Specifically, the reduced performance profile (P₃) is a profile which allows a characteristic quantity related with the engine performance to have a value either lower than or equal to a second threshold (S2), lower than the first, predetermined maximum threshold (S1).

For example, the reduced performance profile P₃ may be associated with an engine performance limitation corresponding to an anti-theft condition, in which the maximum speed of the motor vehicle 1 is highly reduced.

The system 8 further includes assigning performance profiles (block 110) to the drivers of the motor vehicle 1.

During this step, the electronic control unit 10 stores the following data in a database DAT₂ preferably but not necessarily contained therein:
a) Bluetooth names or identification codes C_{id}, each of which is univocally associated with a portable communication device 5;
b) a series of information related to the association between each identification code C_{id} and a corresponding performance profile P₁ or P₂; and
c) a series of information related to the reduced performance profile P₃, not associated with any driver identification code C_{id}, i.e. to a performance profile that the electronic control unit of the engine must implement if the system 8, upon the key-on, does not identify any portable communication device 5.

Specifically, step a) includes the aforesaid pairing operation between each of the portable communication devices 5 belonging to the "potential" drivers of the motor vehicle 1 and the infotelematic system 3.

During the pairing operation, the electronic control unit 10 thus receives the identification codes C_{id} from the wireless communication module 4 and stores them in the database DAT₂ in the form of a list of data related to the identifiable, portable communication devices 5, in which the users are intended to be recognized by the system 8 as the drivers adapted to have a predetermined engine performance profile.

More in detail, step a) includes that the system 8, during identification, assigns a privileged function as "system administrator" to the user/driver of one of the portable devices 4, which allows the driver associated with the portable communication device 5 itself to be able to establish and/or modify the association between each identification code C_{id} present in the list stored in the system 8 and the corresponding performance profile.

In this case, during the first pairing carried out between the portable communication device 5 and the infotelematic system 3, the system 8 assigns a privileged function as "system administrator" to the portable communication device 5 itself in a completely automatic manner, which thus allows the driver to be able to define all the performance profiles to be assigned to the identification codes C_{id} present in the list contained in the database DAT₂.

Furthermore, the step of automatically assigning the administrator function to a portable communication device 5 by the system 8 could preferably, but not necessarily, implement a step of authenticating the driver, which includes both receiving the identification code C_{id} from the portable communication device 5 by means of the wireless communication module, as noted above, and receiving a predetermined authentication code Cₐ stored in the database DAT₂.

The driver could conveniently be requested to provide such an authentication code Cₐ by the system 8 in order to ensure that the driver identified during the first pairing is actually the driver authorized to perform the system administrator function.

Additionally, the step of assigning the system administrator function to the driver could include storing a supplementary identification code Cₛ in the database DAT₂ of the system 8, adapted to allow the user having the privileged administrator function to be able to perform the operations associated with the function itself, in case of absence of the corresponding portable communication device 5, and/or in the case of interruption of the Bluetooth connection, and/or in the case of impossibility to complete the recognition of the corresponding portable communication device 4.

With regard to the above, it is worth mentioning that the setting of the authentication code Cₐ and/or the communication of the supplementary identification code Cₛ by the user may be performed by means of the buttons 6 and/or by means of the voice recognition system included in the infotelematic system 3.

The step b) of associating the performance profiles with the vehicle drivers includes that, after storing the list of the identification codes C_{id} of the portable communication devices 5, the driver enabled for the function of system administrator selects, e.g. by means of a configuration menu displayed by the infotelematic system 3, the various identification codes C_{id} of the portable communication devices 5 contained in the list itself and establishes an association with a main P₁ or secondary P₂ performance profile for each of them. In this case, during this step, the driver associates either a main performance profile P₁ or a secondary performance profile P₂ with each identification code C_{id}. It is worth specifying that while the main performance profile P₁ is univocal and does not include any engine performance limitation, the secondary performance profiles P₂ may be reciprocally different and include, for example, various limitation thresholds of the maximum speed which may be reached by the vehicle.

From the above, it is worth underlining that the possibility of establishing/modifying the association between an identification code C_{id} and a performance profile is reserved to the driver with privileged function as system administrator, while the remaining drivers, indeed associated with the identification codes C_{id} which not correspond to the function as system administrator, are not enabled to perform the aforesaid operations.

Once the step of configuring and assigning the performance profiles has finished, the electronic control system 8 is able to implement the following operations for automatically setting a performance profile of the engine of the motor vehicle 1 whenever a driver inserts the engine ignition key and keys on.

Specifically, with reference to figure 2, when a driver keys on (YES option of block 120), the infotelematic system 3 performs the coupling, i.e. pairing (block 130), with the portable communication device 5 carried by the driver present in the vehicle passenger compartment 1.

It is worth mentioning that if several portable communication devices 5 are present inside the passenger compartment 1 of the vehicle, the infotelematic system 3 may be configured so as to privilege the pairing with the "driver's" portable communication device 5 and exclude the implementation of the same operation with the remaining portable communication devices 5 present aboard the vehicle itself.

Specifically, during this step, the wireless communication module 4 carries out a Bluetooth communication with the portable communication device 5 and communicates the corresponding identification code C_{id} to the electronic control unit 10.

The electronic control unit 10 compares the identification code C_{id} with the identification codes C_{id} present in the list stored in the database DAT₂ and, if the read identification code C_{id} corresponds to one of the stored identification codes (YES option of block 140), the electronic unit 10 of the system 8 selects the performance profile P₁ or P₂ associated with the identification code C_{id} (block 150) from the basis of the database DAT₂, and sends a control signal containing the information related to the selected performance profile to the electronic engine control unit 2.

On the basis of the information contained in the control signal, the electronic engine control unit 2 implements the engine control mode which allows to obtain the selected performance profile P₁ or P₂ associated with the driver (block 160).

If the driver is not provided with a portable communication device 5 recognizable by the system 8 (NO option of block 140), and/or if the Bluetooth communication for the recognition is not correctly completed and consequently the identification procedure is not successful (NO option of block 170), e.g. either because the read identification code C_{id} does not correspond to any code stored in the database DAT₂, or because the driver having the function as system administrator has inserted an incorrect supplementary identification code Cₛ, the electronic control unit 10 of the system 8 selects the performance profile not associated with any identification code, i.e. corresponding to the reduced performance profile P₃, from the database DAT₂. On the basis of the information contained in the control signal, the electronic control unit of the engine 2 implements the engine control mode which allows to obtain the selected, reduced performance profile (block 180).

Instead, if the driver having the function as system administrator is not provided with the portable communication device 5, but has inserted the correct supplementary identification code Cₛ (YES option of block 170), then the electronic control unit 10 of the system 8 selects the main performance profile P₁ from the database DAT₂ (block 200).

With regard to the above description, it is worth mentioning that the implementation of the performance profile of blocks 160, 200 and 180 essentially provides for the electronic control unit 10 of the system 8 sending the control signal containing the information related to the identified performance profile to the electronic engine control unit 2 so that the electronic engine control unit 2 itself, on the basis of the received information, controls the motor vehicle engine according to the performance profile itself.

With regard to the above description, it is worth noting that, as mentioned above, the electronic control system 8 may be able to store a series of data defining the performance profiles associated with the infotelematic system 3 and implement a control mode of the infotelematic system 3 so as to obtain one of the various, predetermined performance profiles of the infotelematic system 3 itself, according to the condition of detection and/or identification of the portable communication device 5.

In this case, the electronic control unit 10 implements operations similar to those described in blocks 100-200 in which the main P₁, secondary P₂ and reduced P₃ performance profiles, instead of being associated with the engine, are associated with the functions of the infotelematic system 3 at respective accessibility conditions. Specifically, the main performance profile P₁ may provide for the detected and/or identified driver being able to completely access the available functions of the infotelematic system 3; the secondary performance profile P₂ may provide for the detected and/or identified driver being able to either completely or partially access the available functions of the infotelematic system 3; while, if no driver is either detected or identified, the reduced performance profile P₃ may provide for the driver not being able to access the available functions of the infotelematic system 3, or being only able to access the system in a restricted manner. It is apparent that in this case, instead of controlling the engine control unit 2, the electronic control unit 2 controls the various performance profiles by means of an electronic control module (not shown) included in the infotelematic system 2.

With regard to the description above, it is worth adding that, according to a different embodiment, the electronic control system 8 may be able to store a series of data defining performance profiles associated with a gearbox of the motor vehicle of automatic or semi-automatic type (not shown) and implement a control mode of the gearbox itself so as to obtain one of the various, predetermined performance profiles of the gearbox itself, according to the condition of detection and/or identification of the portable communication device 5.

In this case, the electronic control unit 10 implements operations similar to those described in blocks 100-200, wherein the main P₁, secondary P₂ and reduced P₃ performance profiles, instead of being associated with the engine, are associated with respective actuating conditions of the gearbox. Specifically, the main performance profile P₁ may provide for the detected and/or identified driver being able to access all the gearbox actuating modes without any restriction; the secondary performance profile P₂ may provide for the detected and/or identified driver being able to completely or partially access the gearbox actuating modes; while if the driver is not detected or not identified, the reduced performance profile P₃ may provide for the driver being only able to actuate the gearbox in a highly restricted manner. It is apparent that in this case, instead of controlling the engine control unit, the electronic control unit 10 controls the various performance profiles by means of an electronic control module (not shown) of the gearbox.

From an examination of the features of the present invention, the advantages that it allows to obtain are apparent.

The association of a specific performance profile with a driver and the driver identification procedure when keying on allow to considerably increase the level of safety of the driver and of the passengers, because they avoid leaving the possibility of activating a speed limiting device or not at the driver's complete discretion, and they ensure the actual implementation of the specific performance profile associated with the driver who is driving the vehicle.

Furthermore, the use of an infotelematic onboard system, with which the vehicle is already equipped, for controlling the setting of engine performance profiles does not require the addition of auxiliary control systems and/or devices aboard the vehicle.

Furthermore, the assigning of the privileged function as system administrator to one of the drivers allows to establish a configuration of the profiles to be assigned to different vehicle drivers which may be easily modified in an extremely simple, versatile, yet safe manner.

It is finally apparent that modifications and variations may be made to the system described and illustrated herein, without departing from the scope of protection of the present invention, as defined in the appended claims.

## Claims

1. An electronic motor vehicle control system (8);
said motor vehicle (1) being provided with automotive systems comprising an engine and user interface means (3) comprising wireless communication means (4) configured to automatically detect and/or identify personal portable wireless communication devices (5) within its communication field;
said electronic motor vehicle control system (8) being **characterized in that** it comprises means for automatically setting a performance profile of the automotive systems (10), which are configured to store performance data defining a series of performance profiles (P₁, P₂, P₃) of said automotive systems, and to implement a control mode of said automotive systems so as to obtain one of said various predetermined performance profiles (P₁, P₂, P₃) according to said detection and/or identification.

2. A system according to claim 1, wherein said performance data define a series of engine performance profiles, and wherein said means for automatically setting a performance profile of the automotive systems (10) are configured to implement an engine control mode so as to obtain one of said various, predetermined engine performance profiles (P₁, P₂, P₃) in response to said detection and/or identification.

3. A system according to claim 2, wherein said means for automatically setting a performance profile of the automotive systems (10) are configured so as to send a first control signal of a control mode related to a reduced performance profile (P₃) to an electronic engine control unit (2) when said personal portable wireless communication device (5) is not identified and/or detected.

4. A system according to claim 3, wherein said means for automatically setting a performance profile of the automotive systems (10) are configured to send:
a second control signal of an engine control mode related to a main performance profile (P₁) of the vehicle associated with a first driver of the vehicle; or
a third control signal of an engine control mode related to a secondary performance profile (P₂) of the vehicle associated with at least one second driver of the motor vehicle,
to said electronic engine control unit (2) when said detection and/or identification is performed.

5. A system according to claim 4, wherein said main performance profile (P₁) is a profile which allows a characteristic quantity of said engine related with the engine performance to reach and exceed a first predetermined maximum threshold (S1).

6. A system according to claim 4 or 5, wherein said secondary performance profile (P₂) is a profile which allows a characteristic quantity of said engine related to the engine performance to have a value either lower than or equal to said first predetermined maximum threshold (S1).

7. A system according to claim 4, 5 or 6, wherein said reduced performance profile (P₃) is a profile which allows a characteristic quantity related to the performance of said engine to have a value either lower than or equal to a second threshold (S2) lower than said first predetermined maximum threshold (S1).

8. A system according to any one of the claims from 5 to 7, wherein said characteristic quantity of the vehicle engine performance is at least one of a vehicle speed, a delivered power and a driving torque generated by the engine.

9. A system according to any one of the claims from 4 to 8, wherein said means for automatically setting a performance profile of the automotive systems (10) are configured for:
implementing an identification procedure of said portable communication device (5), and
sending the second or third control signal to said electronic engine control unit (2) when either said first or said second driver is identified, respectively.

10. A system according to claim 9, wherein said means for automatically setting a performance profile of the automotive systems (10) are configured to send said first control signal to the electronic engine control unit (2) if no driver is identified.

11. A system according to any one of the claims from 3 to 10, wherein said means for automatically setting a performance profile of the automotive systems (10) are configured to assign to said first driver a privileged function as system administrator of said secondary performance profile (P₂) assigned to said at least one second driver.

12. A system according to any one of the preceding claims, wherein said interfacing means (3) are able to actuate a Bluetooth communication with said portable communication device (5).

13. A system according to any one of the preceding claims, wherein said portable communication device (5) is a mobile phone.

14. A system according to any one of the preceding claims, wherein said user interface means (3) comprise an infotelematic system; said performance data defining a series of performance profiles of said infotelematic system; said means for automatically setting a performance profile of the automotive systems (10) are configured to implement a control mode of said infotelematic system so as to obtain one of said various, predetermined performance profiles (P₁, P₂, P₃) according to said detection and/or identification.

15. A system according to claim 14, wherein said means for automatically setting a performance profile of the automotive system (10) are configured to send control signals to said infotelematic system for activating or deactivating the functions of the infotelematic system according to said detection and/or said identification.

16. A system according to claim 15, wherein said main performance profile (P₁) provides for the detected and/or identified driver being completely able to access the available functions of said infotelematic system; while the secondary performance profile (P₂) may provide for the detected and/or identified driver being able to either completely or partially access the available functions of the infotelematic system.

17. A system according to claim 16, wherein if no driver is detected or identified, said reduced performance profile (P₃) may provide for the driver not being able to access the available functions of said infotelematic system (3), or being able to access them in a restricted form only.

18. A system according to any one of the preceding claims, wherein said automotive systems comprise an automotive gearbox; said performance data defining a series of performance profiles of said automotive gearbox; said means for automatically setting a performance profile of the automotive systems (10) being configured to implement a control mode of said automotive gearbox so as to obtain one of said various, predetermined performance profiles (P₁, P₂, P₃) according to said detection and/or identification.

19. A system according to claim 18, wherein said main performance profile (P₁) may provide for the detected and/or identified driver being able to access all actuating modes of the gearbox without any restriction; said secondary performance profile (P₂) may provide for the detected and/or identified driver being able to either completely or partially access the actuating modes of the gearbox.

20. A system according to claim 18, wherein if no driver is detected or identified, said reduced performance profile (P₃) may provide for the driver being able to actuate said automotive gearbox in a restricted form.

21. A motor vehicle (1) comprising automotive systems comprising an engine and user interface means (3) comprising wireless communication means (4) configured to automatically detect and/or identify personal portable wireless communication devices (5) within its communication field; said motor vehicle (1) being **characterized in that** it comprises an electronic control system (8) made according to any one of the preceding claims.

22. A computer product which may be loaded into the memory of an electronic motor vehicle control system(8); said motor vehicle (1) being provided with automotive systems comprising an engine and user interface means (3) comprising wireless communication means (4) configured for automatically detecting and/or identifying personal portable wireless communication devices (5) within its own communication field; said computer product being configured so that said motor vehicle control system (8) works, when run, according to any one of the claims from 1 to 20.
